# EUROPEAN PATENT SPECIFICATION

(11) **EP 4 140 778 B1**
(45) Date of publication and mention of the grant of the patent: **14.08.2024**
(21) Application number: 22177141.3
(22) Date of filing: 03.06.2022
(51) Int. Cl.: B60C 13/00

(54) **PNEUMATIC TIRE**
LUFTREIFEN
PNEUMATIQUE

(30) Priority: 27.08.2021 JP 2021139162
(43) Date of publication of application: 01.03.2023
(73) Proprietor: Toyo Tire Corporation, Itami-shi, Hyogo 664-0847 (JP)
(72) Inventor: KAMADA, Nobuyuki, Itami-shi, Hyogo, 664-0847 (JP)
(74) Representative: Ricker, Mathias

(56) References cited:
- DE-A1- 102008 037 483
- JP-A- 2007 083 933
- JP-A- 2014 136 487
- JP-A- 2014 180 947

## Description

### BACKGROUND OF THE INVENTION

### 1. Field of the Invention

The present invention relates to a pneumatic tire.

### 2. Description of Related Art

A pneumatic tire having patterns on sidewalls as described in, for example, JP 2014/180947 A (Patent Literature 1) has been known. The patterns are formed by arranging many ridges.

Most of patterns in related art are formed by arranging many ridges extending in straight lines at equal intervals. A pattern in which curved ridges are arranged at equal intervals has been known as disclosed in Patent Literature 1. Every pattern increases designability of sidewalls.

Although beautiful patterns have been frequently proposed, an innovative pattern to create new-type visual effects has not been frequently proposed.

The JP 2014/136487 A discloses a pneumatic tire having a belt-like decorative pattern extending along a tire circumferential direction formed on a surface of a side wall portion. In the decorative pattern are repeatedly lined up unit patterns and in the unit patterns are arranged concentrically a plurality of approximately polygonal patterns shaped similarly. The decorative pattern allows the outlines of the plurality of approximately polygonal patterns to easily overlap the unevenness formed on the side wall portion so as to make the unevenness less noticeable.

The DE 10 2008 037 483 A1 discloses a pneumatic tire having a carcass, particularly radial design, with side panels and a tread, where a side panel texture is arranged within a surface area of the side panel. The side panel texture has a moire pattern. Line blade runs concentrically and equidistantly to each other in circle elements.

The JP 2014/136487 A discloses a pneumatic tire having the display area of an annular band wherein the predetermined pattern and a plurality of adjacent ridges around the predetermined pattern is formed, in a side wall portion. The predetermined pattern is formed to be higher than the ridges. The plurality of ridges is formed about a tire rotating shaft and two or more eccentric points provided at different places from the predetermined pattern. The circumferences of the plurality of ridges formed about one eccentric point are different from one another.

### SUMMARY OF THE INVENTION

In view of the above, an object of the present invention is to provide a pneumatic tire in which visual effects can be created.

In a pneumatic tire according to an embodiment including a pattern formed on a sidewall, a reference line extending in a tire circumferential direction and a plurality of reference points provided on the reference line are set on the sidewall, an annular projection centered at each of the reference points is provided, and a plurality of annular projections has the same shape and overlap one another to form the pattern, wherein the shape of the annular pattern is an oval.

The pneumatic tire according to the embodiment has the above features to thereby generate visual effects with a sense of depth.

### BRIEF DESCRIPTION OF THE DRAWINGS

Fig. 1 is a half cross-sectional view of a pneumatic tire in an axial direction;
Fig. 2 is a view of a decorative area on a sidewall seen from the tire axial direction;
Fig. 3 is an enlarged view of a pattern;
Fig. 4 is a cross-sectional view of projections (when a cross-sectional shape is a semicircle);
Fig. 5 is a cross-sectional view of projections (when a cross-sectional shape is a shape formed by including a semicircle and straight lines thereunder);
Fig. 6 is a cross-sectional view of projections (when a cross-sectional shape is a triangle),
Fig. 7 is a cross-sectional view of projections (when a cross-sectional shape is a triangle an apex of which is rounded);
Fig. 8 is a cross-sectional view of projections (when a cross-sectional shape is a trapezoid);
Fig. 9 is a cross-sectional view of projections (when a cross-sectional shape is a rectangle);
Fig. 10 is a view showing reference points provided on a reference line;
Fig. 11 is a view showing projections provided with respect to reference points;
Fig. 12 is a view showing the decorative area including a plurality of projections with a shape of a perfect circle of the same size when seen from the tire axial direction;
Fig. 13 is a view showing the decorative area including a plurality of projections with the shape of the perfect circle of different sizes when seen from the tire axial direction;
Fig. 14 is an enlarged view of a pattern in a case where an interval of adjacent projections changes in the tire circumferential direction;
Fig. 15 is an enlarged view of a pattern in a case where the interval of adjacent projections changes in the tire circumferential direction;
Fig. 16 is a view showing a decorative area including four patterns when seen from the tire axial direction; and
Fig. 17 is a partially enlarged view of the decorative area and an area on an outer side thereof in a tire radial direction.

### DESCRIPTION OF EMBODIMENTS

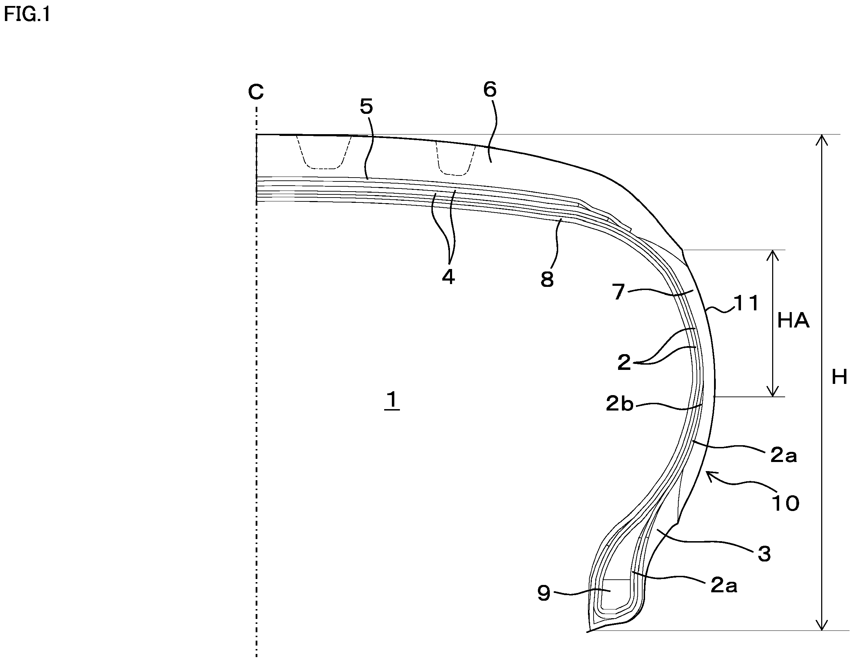

A pneumatic tire 1 according to an embodiment has the same structure as a common radial tire except a structure of sidewalls. Fig. 1 shows a cross-sectional structure of the pneumatic tire 1 according to the embodiment. Fig. 1 shows only a half of the structure in a tire axial direction, and the actual pneumatic tire 1 is right-and-left symmetrical centered at a center line C.

The pneumatic tire 1 is provided with bead parts 9 on both sides in the tire axial direction. Each bead part 9 includes a bead core formed of steel wire wound in a circular shape and a rubber bead filler provided on an outer side in a radial direction of the bead core.

One or two carcass plies 2 are hung across the bead parts 9 on both sides in the tire axial direction. The carcass ply 2 is a sheet-shaped member in which many ply cords aligned in a direction orthogonal to a tire circumferential direction are coated with rubber. The carcass plies 2 form a frame shape of the pneumatic tire 1 between the bead parts 9 on both sides in the tire axial direction and wrap the bead parts 9 by being turned up from the inside to the outside and wound up in the tire axial direction around the bead parts 9. Moreover, a rubber chafer 3 is provided at a place on an outer side of a turned-up portion 2a of the carcass plies 2.

One or a plurality of belts 4 are provided on an outer side in a tire radial direction of the carcass plies 2, and a belt reinforcing layer 5 is provided on an outer side in the tire radial direction of the belts 4. The belt 4 is a member formed of many steel cords coated with rubber. The belt reinforcing layer 5 is a member formed of many organic fiber cords coated with rubber. A tread rubber 6 is provided on an outer side in the tire radial direction of the belt reinforcing layer 5. Many grooves are formed on the tread rubber 6 to form a tread pattern.

Sidewall rubbers 7 are provided on both sides in the tire axial direction of the carcass plies 2. The tread rubber 6 and the sidewall rubber 7 overlap each other on a buttress; however, any of the tread rubber 6 and the sidewall rubber 7 may overlap on the tire surface side. A portion of the sidewall rubber 7 on an inner side in the tire radial direction extends close to the bead part 9 and covers part of the rubber chafer 3. In the embodiment, not only a portion where the sidewall rubber 7 appears on the tire surface but also the entire range which can be visually recognized when the pneumatic tire 1 is seen from the tire axial direction is regarded as a sidewall 10.

A sheet-shaped inner liner 8 made of rubber with low air permeability is bonded to the inside of the carcass ply 2. In addition to these members, members such as a belt-under pad and a chafer are provided according to functional need of the tire.

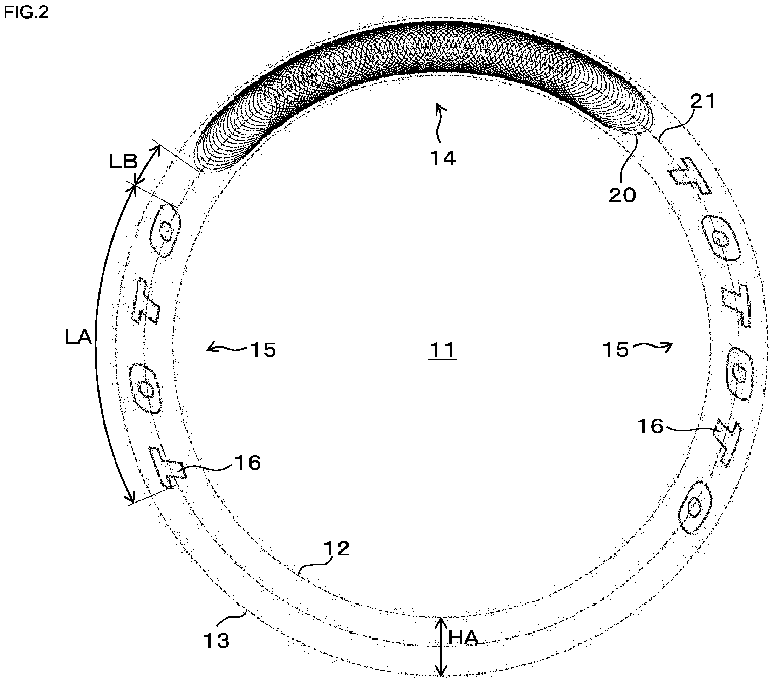

As shown in Fig. 1 and Fig. 2, a decorative area 11 is provided on at least one of the sidewalls 10 on both sides in the tire axial direction. The decorative area 11 has a ring shape centered at a tire rotation axis. The decorative area 11 is an area with a fixed width, which is surrounded by an inner diameter-side line 12 having a circular shape with a small diameter and an outer diameter-side line 13 having a circular shape with a large diameter. The inner diameter-side line 12 and the outer diameter-side line 13 may be lines formed by recesses/protrusions or steps on the tire surface, or may be virtual lines not actually exist. A width HA of the decorative area 11 in the tire radial direction is 5 % or more to 60 % or less (preferably 10 % or more to 35 % or less) of a tire cross-sectional height H (a length from an inner diameter end to an outer diameter surface of the pneumatic tire 1 in the tire radial direction).

A place of the decorative area 11 in the tire radial direction is a place including a position of the maximum width of the pneumatic tire 1. Here, the position of the maximum width of the pneumatic tire 1 is a position where a length in the tire axial direction from the surface of one sidewall 10 in the axial direction to the surface of the other sidewall 10 in the tire axial direction is the longest.

In Fig. 1, the decorative area 11 is provided so as to include a place where an interface between the tread rubber 6 and the sidewall rubber 7 appears on the tire surface. It is preferable that the decorative area 11 is provided so as to include a place where steps tend to appear on the surface of the sidewall 10 as described above. The place where steps tend to appear on the surface of the sidewall 10 is typically a place at an end of a tire constituting member. As such typical places, for example, there are a place of a wound-up end 2b (an end of the turned-up portion 2a of the carcass plies 2) in the tire axial direction and the like, in addition to the place where the interface between the tread rubber 6 and the sidewall rubber 7 appears on the tire surface as described above.

As shown in Fig. 2, labels 15 are provided at opposed two places in the ring-shaped decorative area 11. A pattern 14 is provided at a place interposed between the two labels 15.

A minimum value of an interval LB between the label 15 and the pattern 14 (a length from an end of the label 15 to an end the pattern 14 in the tire circumferential direction) is set to 3 mm for sufficiently securing a space between the label 15 and the pattern 14 which are adjacent to each other. A maximum value of the interval LB between the label 15 and the pattern 14 is set to 60 % of a length LA of the label 15 in the circumferential direction (a length from one end of the label 15 in the tire circumferential direction to the other end thereof in the tire circumferential direction) for sufficiently securing an area of the pattern 14.

The label 15 is formed by arranging a plurality of letters 16 in the tire circumferential direction. Any of a manufacturer's name, a product name, a brand's name, and the like is displayed by the plural letters 16. Each of these letters 16 has a shape in which what is expressed by each letter can be clearly recognized for the purpose of displaying the manufacturer's name or the like. These letters 16 are also formed by being edged with recessed or protruding lines.

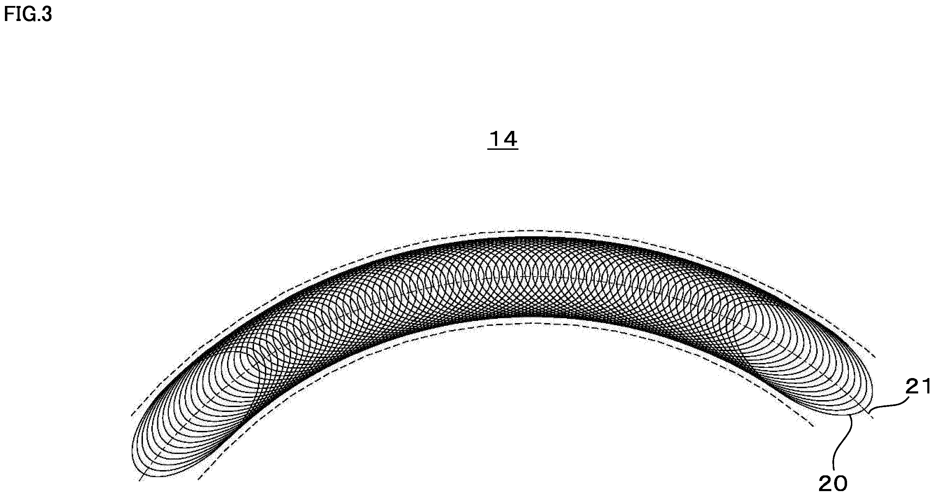

As shown in Fig. 2 and Fig. 3, the pattern 14 is formed by arranging many projections 20 in the tire circumferential direction so as to overlap one another. All projections 20 have the same elliptical shape with the same size when seen from a direction perpendicular to the surface of the sidewall 10. Moreover, all projections 20 are arranged so that a major axis thereof is along the tire circumferential direction and a minor axis thereof is along the tire radial direction.

In the elliptical shape, a length of the minor axis is 50 % or more to less than 100 % of a length of the major axis. The length of the projection 20 in the tire radial direction (namely, the length of the minor axis of the elliptical shape) is 50 % or more to 95 % or less of the width HA of the decorative area 11 in the tire radial direction.

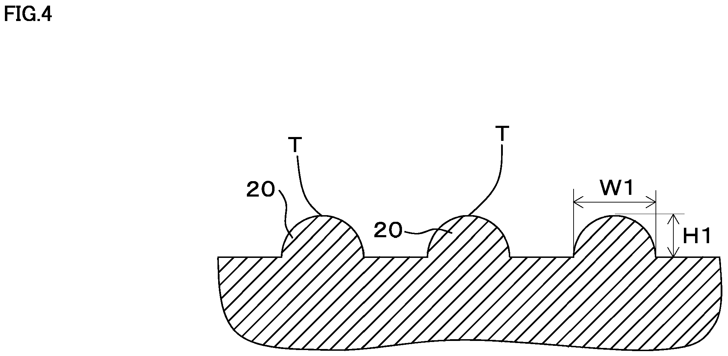

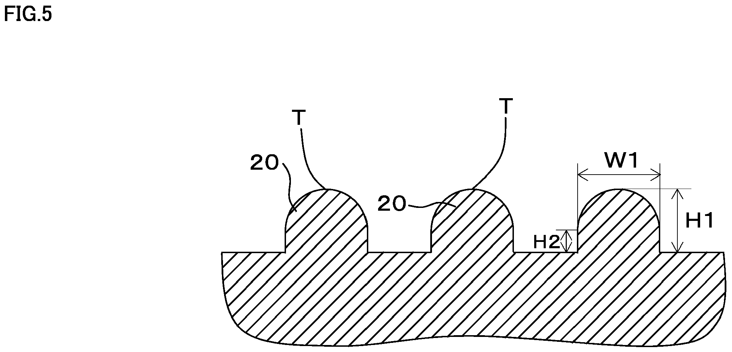

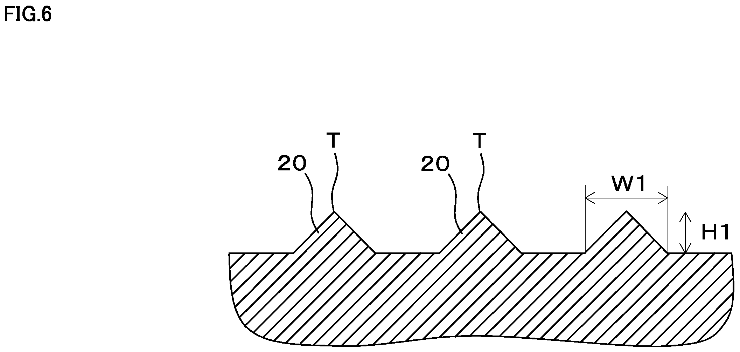

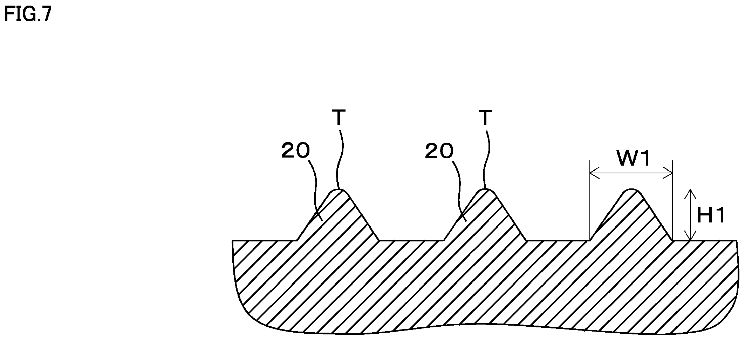

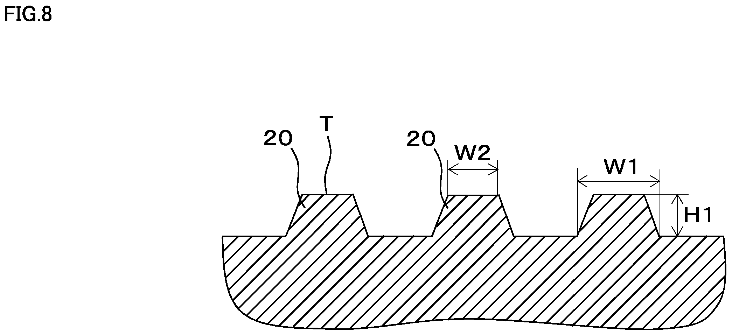

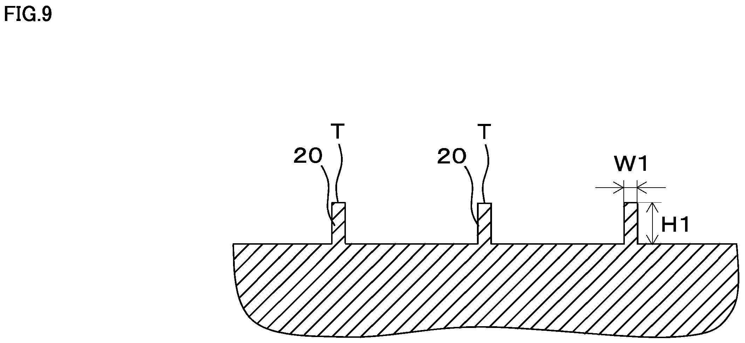

Here, the projections 20 protrude on the tire surface and extend long along the tire surface. The projections 20 are also called ridges. As cross-sectional shapes of the projections 20 in a direction orthogonal to a longitudinal direction thereof, a semicircle (Fig. 4), a shape including a semicircle and straight lines under the semicircle (Fig. 5), a triangle (Fig. 6), a triangle an apex of which is rounded (Fig. 7), a trapezoid (Fig. 8), a rectangle (Fig. 9), and so on can be cited. Here, the shape the apex of which is rounded (Fig. 7) is a kind of triangle. Shape in which the above cross-sectional shapes are slightly changed, for example, a sawtooth shape in which the triangles in Fig. 6 are deformed to be inclined and the like can be considered, though not shown. Lines drawn as the projections 20 in Fig. 2 and Fig. 3 correspond to center lines of the projections 20 in the width direction (lines at positions indicated by "T" in Fig. 4 to Fig. 9) .

In the projections 20 in any of these cross-sectional shapes, a height H1 of the projections 20 is 0.1 mm or more to 0.8 mm or less (preferably 0.1 mm or more to 0.4 mm or less). In the projections 20 in any of these cross-sectional shapes, a width W1 of the projections 20 is 0.1 mm or more to 1.0 mm or less.

The projections 20 can be formed by a mold used at the time of vulcanization molding. Here, the projections 20 having a low height H1 and a small width W1 can be formed by a mold in which fine irregularities are formed by laser processing.

When a radius of the semicircle in Fig. 4 and Fig. 5 is "R", a length H2 of the straight line of the projection 20 with the shape of Fig. 5 formed by including the semicircle and the straight lines in cross section is represented by (the height H1 of the projection 20) - (the radius R of the semicircle). Moreover, in the projection 20 with the trapezoidal shape in Fig. 8, a length W2 of an upper side is 20 % or more to 50 % or less of a length of a lower side (namely, the width W1 of the projection 20).

In all projections 20 in one pattern 14, centers thereof are provided on one reference line 21. Here, the center of the projection 20 means an intersection between the major axis and the minor axis of the elliptical shape. The reference line 21 is one line extending in the tire circumferential direction at a particular position in the tire radial direction in the decorative area 11. The reference line 21 is not actually drawn in the decorative area 11 but a virtual line.

The position in the tire radial direction of the reference line 21 is preferably a central position of the decorative area 11 in the tire radial direction. It is also preferable that the reference line 21 is a line drawing a circle a radius of which has a length of 45 % or more to 65 % or less of the tire cross-sectional height H centered at the tire rotation axis.

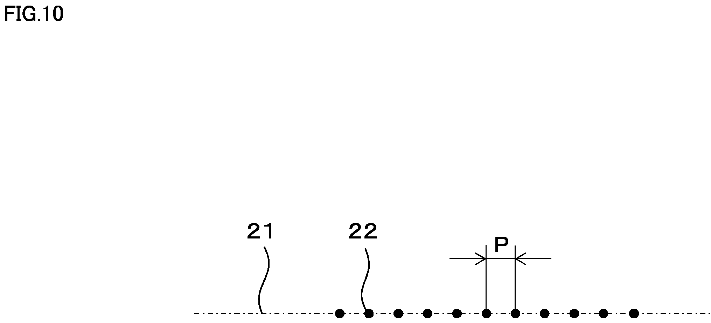

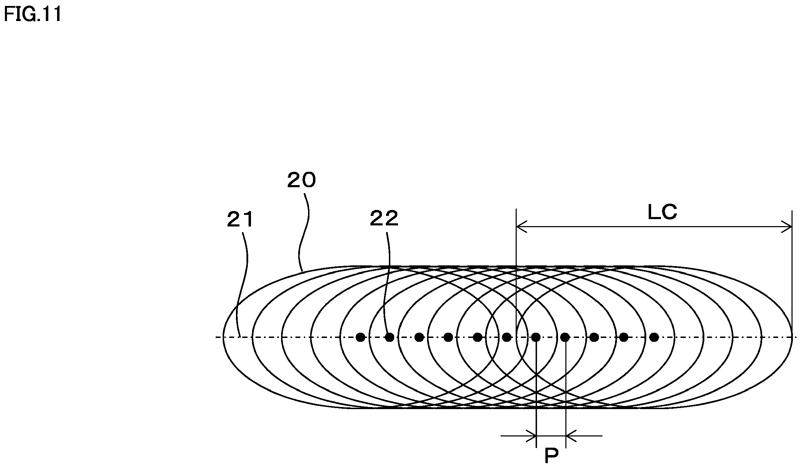

As shown in Fig. 10, a plurality of reference points 22 is set on the reference line 21 at equal intervals. The reference points 22 are not actually drawn but are virtual points. Then, the centers of the projections 20 are arranged at each of the reference points 22 as shown in Fig. 11. Fig. 10 and Fig. 11 are shown in a simple manner for explanation, in which a curvature of the reference line 21, an interval of the reference points 22, the number of projections 20, and the like differ from those in Fig. 2 and Fig. 3.

A distance "P" (see Fig. 10 and Fig. 11) between adjacent reference points 22 is, for example, 1 % or more to 15 % or less (preferably 5 % or more to 15 % or less) of a length LC (see Fig. 11) of one protrusion 20 in the tire circumferential direction. Therefore, 6 or more to 100 or less (preferably 6 or more to 20 or less) other projections 20 aligned from one projection 20 in one direction of the tire circumferential direction overlap with respect to one projection 20.

A specific numerical value of the distance "P" between adjacent reference points 22 is, for example, 0.3 mm or more to 3.0 mm or less. In that case, an interval between adjacent projections 20 is also 0.3 mm or more to 3.0 mm or less. Such projections 20 are formed by the mold used at the time of vulcanization molding. When the interval between adjacent projections 20 is narrow, the projections 20 can be formed by a mold in which fine irregularities are formed by laser processing.

When the decorative areas 11 are provided on both sides in the tire axial direction, such features of projections 20 are common to the decorative areas 11 on both sides in the tire axial direction.

As described above, the reference line 21 extending in the tire circumferential direction and the plural reference points 22 provided on the reference line 21 are set on the sidewall 10, and the annular projections 20 centered at each of the reference points 22 are provided in the pneumatic tire 1 according to the embodiment. The plural projections 20 have the same shape and overlap one another to form the pattern 14 as the pattern. As the annular projections 20 with the same shape are arranged so as to overlap one another, a sense of depth is generated in the pattern 14, which generates new visual effects in the pneumatic tire 1.

Here, the projections 20 has the elliptical shape; therefore, the sense of depth like curved pipes is generated in the pattern 14, which generates new visual effects in the pneumatic tire 1. Moreover, the plural projections 20 have the same size; therefore, the sense of depth can be particularly felt in the pattern 14.

Since the distance between adjacent reference points 22 is 1 % or more to 15 % or less of the length of the projection 20 in the tire circumferential direction, the plural projections 20 are seen to overlap properly, which generates a good sense of depth. Moreover, the distance between adjacent reference points 22 is the same between all reference points 22; therefore, the sense of depth with beauty can be particularly felt in the pattern 14.

The above embodiment is cited as an example and the scope of the invention is not limited to this. Various modifications may occur in the above embodiment in a scope not departing from the gist of the invention.

First, the shape drawn by the protrusions as the pattern is not limited to the elliptical shape in the embodiment. The shape drawn by the protrusions is preferably an annular shape when seen from the direction perpendicular to the surface of the sidewall 10. A preferable shape in annular shapes is a shape called oval. The oval is a closed annular shape mainly formed by a curved line (for example, more than half of the entire length of lines forming the protrusion is a curved line). The oval includes an ellipse, a perfect circle, an egg shape, and the like, in addition to the elliptical shape in the embodiment. The elliptical shape and the ellipse include a shape elongated in the tire circumferential direction, a shape elongated in the tire radial direction, and a shape elongated in a direction inclined to the tire circumferential direction. The oval also includes a closed curve formed by crossing between the surface of a cone and a plane perfectly traversing the cone.

The center of the projection corresponds to a centroid of a plane with a shape drawn by the projection. When the shape drawn by the projection is a shape the center of which is mathematically defined, the center of the projection is determined in accordance with the definition. The center of the protrusion determined as described above is provided on the reference line 21 of the sidewall 10.

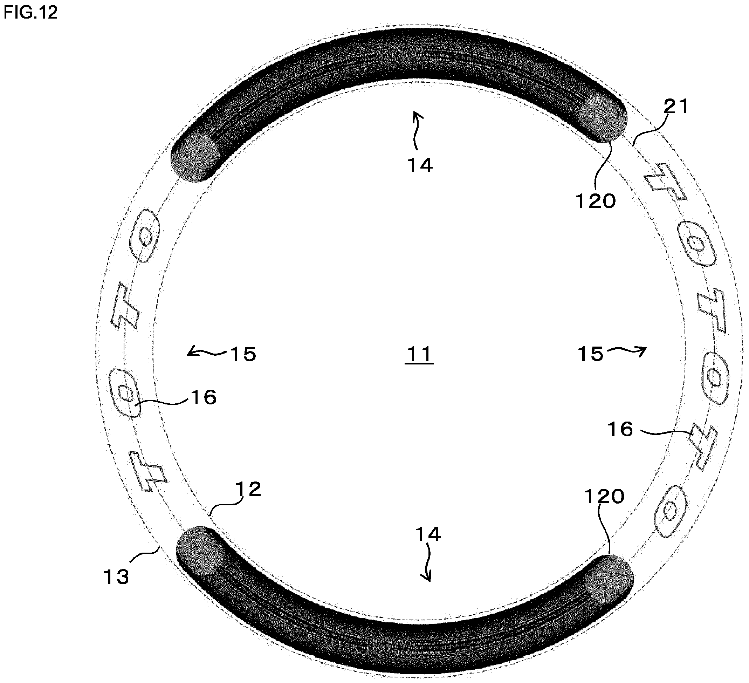

As one of a modification example of the shape drawn by the protrusion, the perfect circle like projections 120 in Fig. 12 can be cited. Regarding the projections 120 with the shape of the perfect circle, the cross-sectional shape, the height, the width, the length of the projection 120 in the tire radial direction with respect to the width HA of the decorative area 11 in the tire radial direction, the interval between the central position of the projection 120 and an adjacent projection 120 are the same as in the case of the projections 20 with the elliptical shape. As the projections 120 with the shape of the perfect circle are arranged so as to overlap one another, visual effects as if seeing curved pipes can be generated.

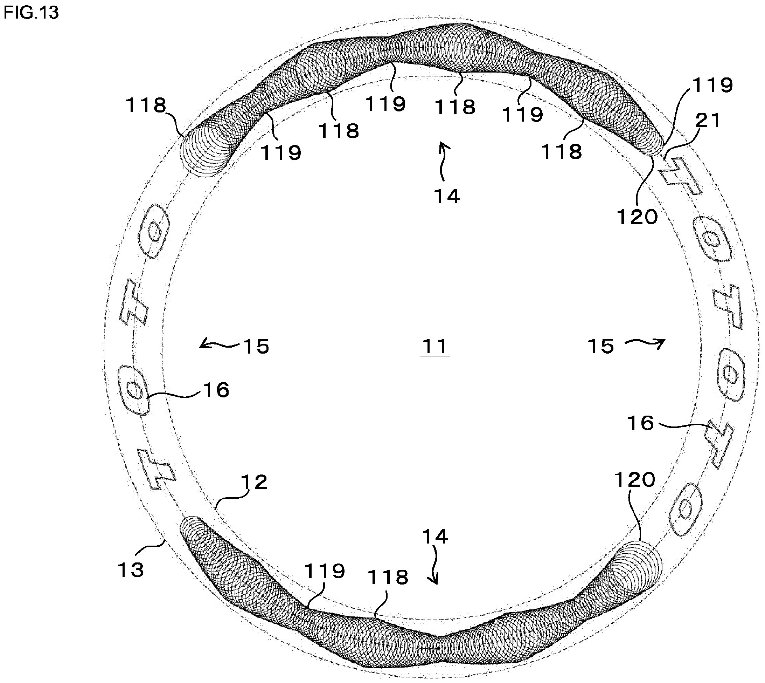

The size of the projections may differ according to the place. For example, all of a plurality of projections 120 in Fig. 13 have the shape of the perfect circle; however, the size gradually changes in the tire circumferential direction. A radius of the projections 120 in Fig. 13 is the largest at maximum points 118 provided at plural places in the tire circumferential direction at equal intervals, and is the smallest at minimum points 119 provided between the two maximum points 118. Then, the radius of the projections 120 gradually changes from the maximum point 118 to the minimum point 119. Accordingly, visual effects different from the case where all projections have the same size are generated.

The radius of the projection 120 at the minimum point 119 is 45 % or more to 75 % or less of the radius of the projection 120 at the maximum point 118. An interval between the adjacent projections 120 is 1% or more to 15 % or less (preferably 5 % or more to 15 % or less) of a length of the projection 120 at the maximum point 118 in the circumferential direction.

In the case where the size of the projections gradually changes in the tire circumferential direction, the number of the maximum points and the number of minimum points are not limited. For example, one pattern 14 may include just one maximum point and one minimum point. The length from the maximum point to the minimum point in the tire circumferential direction also varies. In the upper pattern 14 in Fig. 13, the maximum point 118 is placed at a left end and the minimum point 119 is placed at a right end; however, there can be cases where the minimum point is placed at the left end and the maximum point is placed at the right end, where the maximum points are placed at left-and-right both ends, and where the minimum points are placed at left-and-right both ends.

Also, regarding the projections with the elliptical shape, the size (specifically the length in the tire radial direction) may gradually change in the tire circumferential direction between the maximum point and the minimum point in the same manner as in the case of the projections 120 with the shape of the perfect circle. The length of the projection in the tire radial direction at the minimum point is 45 % or more to 75 % or less of the length of the projection in the radial direction at the maximum point.

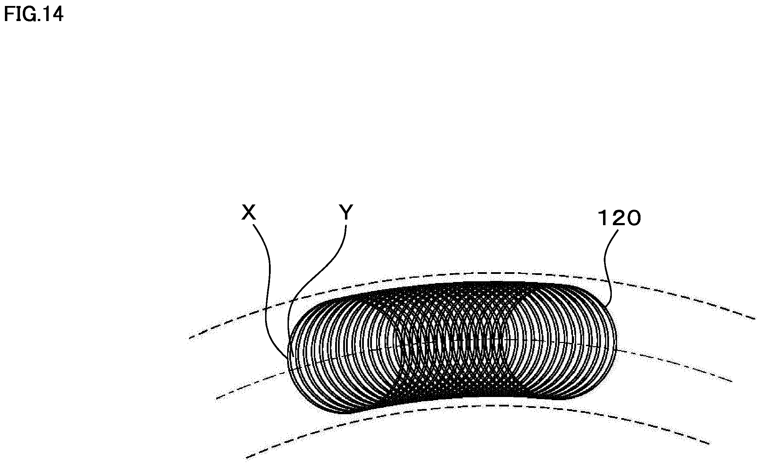

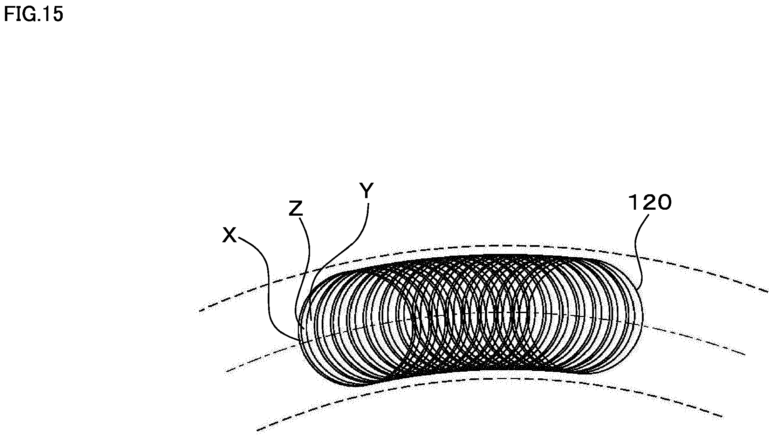

As shown in Fig. 14 and Fig. 15, the interval between the adjacent projections 120 may change in the tire circumferential direction. In Fig. 14, a place X with a small interval and a place Y with a large interval in adjacent projections 120 are alternately repeated in the tire circumferential direction. The place Y with the large interval in adjacent projections 120 has the interval twice as large as the interval at the place X with the small interval.

In Fig. 15, the place X with the small interval, a place Z with an intermediate interval, and the place Y with the large interval in adjacent projections 120 are repeated in this order in the tire circumferential direction. The place Z with the intermediate interval has the interval twice as large as the interval at the place X with the small interval, and the place Y with the large interval has the interval five times as large as the interval at the place X in adjacent projections 120.

Regarding the projections with the elliptical shape, the interval between adjacent projections may also change in the tire circumferential direction in the same manner as in Fig. 14 and Fig. 15.

Additionally, the number of the patterns 14 provided on one sidewall 10 is not limited. For example, the pattern 14 including the projections 20 with the elliptical shape as shown in Fig. 2 may be provided at opposed two places in the decorative area 11 in the same manner as the patterns 14 with the shape of the perfect circle shown in Fig. 12 and Fig. 13.

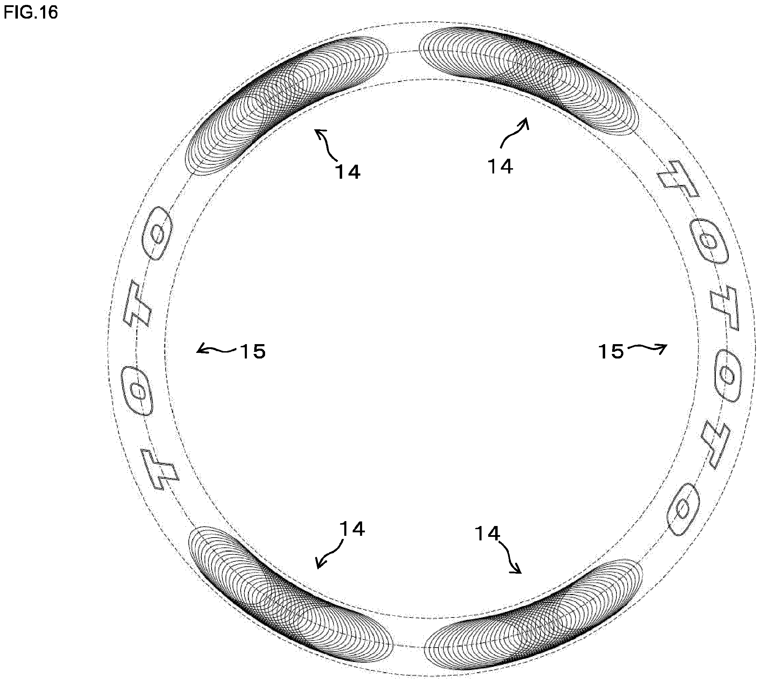

In a modification example shown in Fig. 16, two patterns 14 separated in the tire circumferential direction are arranged in the tire circumferential direction between the label 15 and the label 15. Then, the total four patterns 14 are provided with respect to one sidewall 10.

It is also preferable that the pattern 14 is formed of grooves instead of projections. Here, the groove is recessed from the tire surface and extends long along the tire surface. Various shapes such as a triangle, a trapezoid, a rectangle, and a semicircle can be considered as cross-sectional shapes of the groove in a direction orthogonal to a longitudinal direction thereof. A pattern formed of the projection or the groove drawing an annular line such as the elliptical shape when seen from a direction perpendicular to the surface of the sidewall 10 will be referred to as an annular pattern.

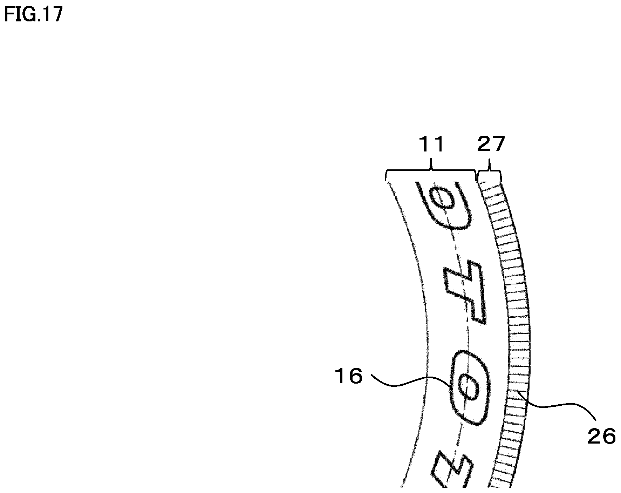

It is further preferable that a band-shaped area 27 in which a plurality of projections 26 extending in the tire radial direction are arranged at equal intervals in the tire circumferential direction is provided on an outer side in the tire radial direction of the decorative area 11 as shown in Fig. 17. The plurality of projections 26 are arranged at equal intervals of 0.3 mm or more to 1.0 mm or less in the tire circumferential direction. The band-shaped area 27 may be provided at part in the tire circumferential direction as well as may be provided over the entire circumference in the tire circumferential direction. The band-shaped area 27 is adjacent to the outer side of the decorative area 11. A dimension of the band-shaped area 27 in the tire radial direction is preferably 5 mm or more to 12 mm or less.

When the above band-shaped area 27 is provided, occurrence of interface irregularities or bear between members of the tread rubber 6 and the sidewall rubber 7 can be suppressed. Moreover, a black band-shaped area is formed by light attenuation effects obtained by providing the projections 26, which can emphasize the decorative area 11.

### Reference Signs List

C: center line
1: pneumatic tire
2: carcass ply
2a: turned-up portion
2b: wound-up end
3: rubber chafer
4: belt
5: belt reinforcing layer
6: tread rubber
7: sidewall rubber
8: inner liner
9: bead part
10: sidewall
11: decorative area
12: inner diameter-side line
13: outer diameter-side line
14: pattern
15: label
16: letter
20: projection
21: reference line
22: reference point
26: projection
27: band-shaped area
118: maximum point
119: minimum point
120: projection

## Claims

1. A pneumatic tire (1) comprising:
a pattern (14) formed on a sidewall (10),
wherein a reference line (21) extending in a tire circumferential direction and a plurality of reference points (22) provided on the reference line (21) are set on the sidewall (10),
an annular pattern centered at each of the reference points (22) is provided, and
a plurality of annular patterns has the same shape and overlap one another to form the pattern (14), **characterized in that**
the shape of the annular pattern is an oval.

2. The pneumatic tire (1) according to claim 1,
wherein the plurality of annular patterns has the same size.

3. The pneumatic tire (1) according to any one of claims 1 or 2,
wherein the plurality of annular patterns has different sizes, and
a ratio of a length of a smaller annular pattern in a tire radial direction to a length of a larger annular pattern in the tire radial direction is 0.45 or more to 0.75 or less.

4. The pneumatic tire (1) according to claim 3,
wherein the size of the plurality of annular patterns gradually changes in the tire circumferential direction.

5. The pneumatic tire (1) according to any one of claims 1 to 4,
wherein a distance between the reference points (22) adjacent to each other is 1 % or more to 15 % or less of a length of the annular pattern in the tire circumferential direction.

6. The pneumatic tire according to any one of claims 1 to 5,
wherein the distance between the reference points (22) adjacent to each other is the same between all reference points (22).

7. The pneumatic tire (1) according to any one of claims 1 to 5,
wherein the distance between the reference points (22) adjacent to each other changes in the tire circumferential direction.

8. The pneumatic tire (1) according to any one of claims 1 to 7,
wherein an area where a plurality of projections (26) extending in the tire radial direction is arranged in the tire circumferential direction at equal intervals, a dimension of which in the tire radial direction is 5 mm or more to 12 mm or less, is provided on an outer side in the tire radial direction of the decorative area (11) where the annular patterns are provided on the sidewall (10).

9. The pneumatic tire (1) according to any one of claims 1 to 8,
wherein the annular patterns are projections (20, 120) protruding on a tire surface.

10. The pneumatic (1) tire according to any one of claims 1 to 8,
wherein the annular patterns are grooves recessed from a tire surface.

## Patentansprüche

1. Pneumatischer Reifen (1), welcher aufweist:
ein Muster (14), das auf einer Seitenwand (10) ausgebildet ist,
wobei eine Bezugslinie (21), die sich in einer Umfangsrichtung des Reifens erstreckt, und eine Vielzahl an Bezugspunkten (22), die auf der Bezugslinie (21) vorgesehen sind, auf die Seitenwand (10) gesetzt sind,
ein ringförmiges Muster, das bei jedem der Bezugspunkte (22) zentriert ist, vorgesehen ist, und
eine Vielzahl an ringförmigen Mustern die gleiche Form aufweist und einander überlappen, um das Muster (14) zu bilden, **dadurch gekennzeichnet, dass**
die Form des ringförmigen Musters ein Oval ist.

2. Pneumatischer Reifen (1) nach Anspruch 1, wobei die Vielzahl der ringförmigen Muster die gleiche Größe aufweist.

3. Pneumatischer Reifen (1) nach einem der Ansprüche 1 oder 2, wobei
die Vielzahl der ringförmigen Muster unterschiedliche Größen aufweist und
das Verhältnis der Länge eines kleineren ringförmigen Musters in einer Radialrichtung des Reifens zu einer Länge eines größeren ringförmigen Musters in der Radialrichtung des Reifens 0,45 oder mehr bis 0,75 oder weniger beträgt.

4. Pneumatischer Reifen (1) nach Anspruch 3, wobei sich die Größe der Vielzahl der ringförmigen Muster allmählich in der Umfangsrichtung des Reifens ändert.

5. Pneumatischer Reifen (1) nach einem der Ansprüche 1 bis 4, wobei ein Abstand zwischen den einander benachbarten Bezugspunkten (22) 1 % oder mehr bis 15 % oder weniger einer Länge des ringförmigen Musters in der Umfangsrichtung des Reifens beträgt.

6. Pneumatischer Reifen nach einem der Ansprüche 1 bis 5, wobei der Abstand zwischen den einander benachbarten Bezugspunkten (22) zwischen allen Bezugspunkten (22) gleich ist.

7. Pneumatischer Reifen (1) nach einem der Ansprüche 1 bis 5, wobei sich der Abstand zwischen den einander benachbarten Bezugspunkten (22) in der Umfangsrichtung des Reifens ändert.

8. Pneumatischer Reifen (1) nach einem der Ansprüche 1 bis 7, wobei ein Bereich, in dem eine Vielzahl an Vorsprüngen (26), die sich in der der Radialrichtung des Reifens erstrecken, in der Umfangsrichtung des Reifens in gleichen Abständen angeordnet ist, wobei eine Abmessung in der Radialrichtung des Reifens 5 mm oder mehr bis 12 mm oder weniger beträgt, auf einer äußeren Seite in der Radialrichtung des Reifens des dekorativen Bereichs (11) vorgesehen ist, in dem die ringförmigen Muster auf der Seitenwand (10) vorgesehen sind.

9. Pneumatischer Reifen (1) nach einem der Ansprüche 1 bis 8, wobei die ringförmigen Muster Vorsprünge (20, 120) sind, die auf einer Reifenoberfläche vorstehen.

10. Pneumatischer Reifen (1) nach einem der Ansprüche 1 bis 8, wobei die ringförmigen Muster Rillen sind, die von einer Reifenoberfläche zurückgesetzt sind.

## Revendications

1. Pneumatique (1) comprenant :
un motif (14) formé sur une paroi latérale (10),
dans lequel une ligne de référence (21) s'étendant dans une direction circonférentielle du pneu et une pluralité de points de référence (22) prévus sur la ligne de référence (21) sont définies sur la paroi latérale (10),
un motif annulaire centré au niveau de chacun des points de référence (22) est prévu, et
une pluralité de motifs annulaires présente la même forme et se recouvre les uns les autres pour former le motif (14), **caractérisé en ce que**
la forme du motif annulaire est un ovale.

2. Pneumatique (1) selon la revendication 1,
dans lequel la pluralité de motifs annulaires présente la même taille.

3. Pneumatique (1) selon l'une quelconque des revendications 1 ou 2,
dans lequel la pluralité de motifs annulaires présente différentes tailles, et
un rapport entre une longueur d'un motif annulaire plus petit dans une direction radiale du pneu et une longueur d'un motif annulaire plus grand dans la direction radiale du pneu s'élève à 0,45 ou à plus de 0,75 ou moins.

4. Pneumatique (1) selon la revendication 3,
dans lequel la taille de la pluralité de motifs annulaires change progressivement dans la direction circonférentielle du pneu.

5. Pneumatique (1) selon l'une quelconque des revendications 1 à 4,
dans lequel une distance entre les points de référence (22) adjacents les uns aux autres s'élève à 1 % ou à plus de 15 % ou moins d'une longueur du motif annulaire dans la direction circonférentielle du pneu.

6. Pneumatique selon l'une quelconque des revendications 1 à 5,
dans lequel la distance entre les points de référence (22) adjacents les uns aux autres est la même entre tous les points de référence (22).

7. Pneumatique (1) selon l'une quelconque des revendications 1 à 5,
dans lequel la distance entre les points de référence (22) adjacents les uns aux autres change dans la direction circonférentielle du pneu.

8. Pneumatique (1) selon l'une quelconque des revendications 1 à 7,
dans lequel une zone où une pluralité de saillies (26) s'étendant dans la direction radiale du pneu est agencée dans la direction circonférentielle du pneu à intervalles égaux, dont une dimension dans la direction radiale du pneu s'élève à 5 mm ou à plus de 12 mm ou moins, est prévue sur un côté extérieur dans la direction radiale du pneu de la zone décorative (11) où les motifs annulaires sont prévus sur la paroi latérale (10).

9. Pneumatique (1) selon l'une quelconque des revendications 1 à 8,
dans lequel les motifs annulaires sont des saillies (20, 120) dépassant sur une surface du pneu.

10. Pneumatique (1) selon l'une quelconque des revendications 1 à 8,
dans lequel les motifs annulaires sont des rainures évidées dans une surface du pneu.
